# EUROPEAN PATENT SPECIFICATION

(11) **EP 2 406 953 B1**
(45) Date of publication and mention of the grant of the patent: **10.06.2015**
(21) Application number: 10797568.2
(22) Date of filing: 22.06.2010
(51) Int. Cl.: H04N 19/119, H04N 19/176, H04N 19/136, H04N 19/115, H04N 19/182, H04N 19/15, H04N 19/90, H04N 19/184, H04N 19/593, H04N 19/46

(54) **A METHOD OF COMPRESSION OF GRAPHICS IMAGES AND VIDEOS**
VERFAHREN ZUR KOMPRESSION VON BILDERN UND VIDEOS AUS GRAPHIKEN
PROCÉDÉ DE COMPRESSION D'IMAGES GRAPHIQUES ET DE VIDÉO

(30) Priority: 22.06.2009 US 269267 P
(43) Date of publication of application: 18.01.2012
(73) Proprietor: Sony Corporation, Tokyo 108-0075 (JP)
(72) Inventor: GHARAVI-ALKHANSARI, Mohammad, Santa Clara California 95015 (US); LIU, Wei, San Jose California 95131 (US); TABATABAI, Ali, Cupertino California 95014 (US)
(74) Representative: Turner, James Arthur
(86) International application number: PCT/US2010/039469
(87) International publication number: WO 2011/005511

(56) References cited:
- WO-A1-2011/149848
- WO-A2-01/91454
- JP-A- 2007 020 010
- JP-A- 2007 020 010
- KR-A- 20020 026 242
- US-A- 5 805 226
- US-A1- 2003 095 595
- US-A1- 2011 085 058
- DELP E J ET AL: "Image compression using block truncation coding (BTC)", IEEE TRANSACTIONS ON COMMUNICATIONS, IEEE SERVICE CENTER, PISCATAWAY, NJ. USA, vol. Com-27, no. 9, 1 September 1979 (1979-09-01), pages 1335-1342, XP002141720, ISSN: 0090-6778, DOI: 10.1109/TCOM.1979.1094560

## Description

### FIELD OF THE INVENTION

The present invention relates to the field of image processing. More specifically, the present invention relates to compression of graphics in images and videos.

### BACKGROUND OF THE INVENTION

There are numerous methods proposed for compression of digital images and videos. There are also several standards developed for image and video compression, including JPEG for image compression, and MPEG1, MPEG2, MPEG4, H.261, H.263 and H.264 for video compression. Image and video compression algorithms typically work based on an assumption about the nature of the images to be compressed. For natural images and videos, a common assumption is the presence of strong correlation between the values of neighboring pixels. That is, the assumption that the values of neighboring pixels are typically close to each other. However, for a variety of synthetic images generated by computers, the assumption does not hold.

Previously proposed arrangements are disclosed in Delp et al: "Image Compression using Block Truncation Coding (BTC)", IEEE Transactions on Communications, Com-27, no. 9, pages 1335-1342, September 1979, and WO 01/91454 A2, US 2003/095595 A1, JP 2007-020010 A and US 5 805 226 A.

### SUMMARY OF THE INVENTION

Respective aspects of the invention are defined in claims 1 and 5.

Compression of graphics images and videos includes according to embodiments of the invention partitioning an image into blocks, determining the number of bitplanes for encoding each block, encoding the block by grouping pixel values so that within each group, the pixel values are the same or similar, sending the number of groups and the pixel value of each group and sending a signal for each pixel to indicate the group for that pixel, as well as using leftover bits from a bit budget for sending refinement bits for each pixel.

### BRIEF DESCRIPTION OF THE DRAWINGS

FIG. 1 illustrates two examples of blocks containing groups of the same values.
FIG. 2 illustrates two examples of blocks containing groups of similar values.
FIGs. 3A-R illustrate graphs of an example of grouping according to some embodiments.
FIG. 4 illustrates a block diagram of an exemplary computing device configured to implement the compression method according to some embodiments.
FIG. 5 illustrates a flowchart of a method of encoding a video according to some embodiments.

### DETAILED DESCRIPTION OF THE PREFERRED EMBODIMENT

A method of compression of synthetic (graphic) images is described herein. An image is partitioned into blocks. Each image block is encoded to generate a fixed and preset number of bits. Each block is encoded independently from other blocks in the image. In some embodiments, each color component of each block is coded independently from other color components. In some embodiments, the different color components of a block are coded jointly so that the different color components share their bit budget and the block header bits. A block size of 8 x 2 is used as an example herein, although the block size is able to be any size including the entire image.

A bit depth, to which we also refer as depth, is the number of bits needed to represent the largest possible pixel value. For example, if the pixel values are in the range 0 to 1023, the bit depth is 10. In general, the pixel values are considered to be in the range 0 to (2^{depth} - 1). A bit depth of 10 is utilized herein, although any bit depth is able to be used.

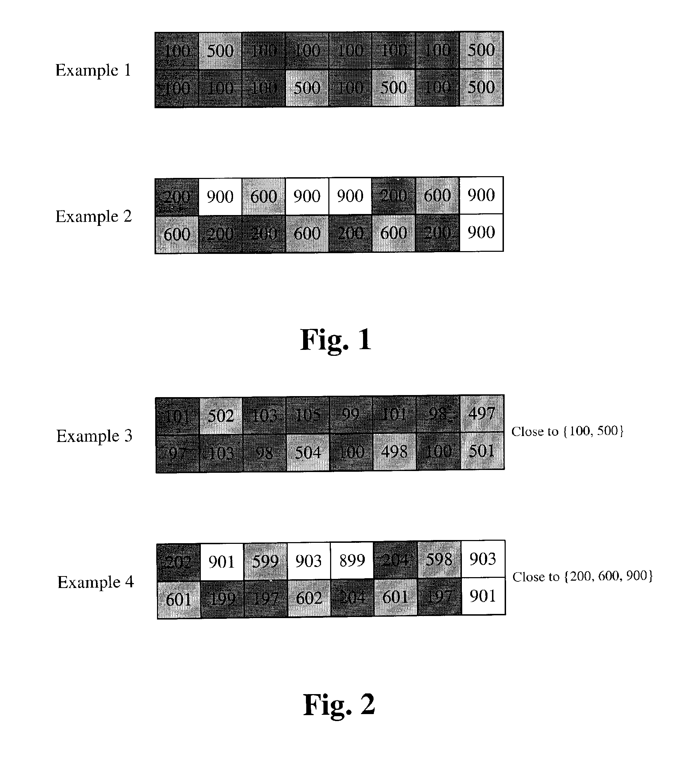

When image blocks have the same or similar bit values within, the bit values are able to be grouped. Figure 1 illustrates two examples of blocks containing groups of the same values. In Example 1, there are pixel values of 100 and 500. In Example 2, there are pixel values of 200, 600 and 900. The pixel values in the Example 1 are able to be grouped into two groups, a first group with pixel values of 100 and a second group with pixel values of 500. The pixel values in the Example 2 are able to be grouped into three groups, a first group with pixel values of 200, a second group with pixel values of 600 and a third group of pixel values of 900.

For natural images, blocks that are able to be grouped this way are not very common. However, for computer generated images, these types of blocks are common.

In a simplified version of a method of compression of images where pixels are able to be grouped, it is assumed that pixel values are exact matches, such as those shown in Figure 1. Then, the encoding process groups the pixel values in the block, so that within each group, the pixel values are the same. The number of groups are sent. The value of each group is then sent. For each pixel, a signal is sent indicating to which group the pixel belongs. For example, using Example 1 above, a "2" is first sent, indicating two groups of values in the block, then a "100" is sent, indicating the pixels in group one have a value "100" and then a "500" is sent, indicating the pixels in group two have a value "500." For each pixel, the group number is sent, such as a "1," indicating group one and a "2," indicating group two.

In some cases, the pixel values in an image block are not necessarily members of a small set, but are "close" to members of a small set. Figure 2 illustrates two examples of blocks containing groups of similar values. In the Example 3, there are pixel values near 100 and near 500. In the Example 4, there are pixel values near 200, near 600 and near 900.

As described above, a simplified compression process is possible if many pixel values are the same. However, additional steps are utilized if pixel values are similar but not the same.

Since not all of the bits of the bitbudget are utilized for coding, the unused bits are able to be used to introduce refinement at the codec. The refinement is able to be similar to that described US 2011/0292247 A1 (published patent document).

The encoder encodes the most significant bitplanes of the pixels by using groups. If any bits from the bit budget are left unused, they are used for refinement of the pixel values. Any bitplanes of the original pixels that are not coded by the encoder are estimated by the decoder.

### Encoder

For each of all possible number of bitplanes (qDepth = 1 to 10), starting from the most significant bitplane (MSB) and going to the least significant bitplane (LSB), the encoder determines many items. If the encoding process stops at the end of the current bitplane, the number of groups with exact matches found are determined by taking into account only bitplanes 1 to qDepth. The number of bits needed to transmit the groups using the concept of exact matches is determined. The number of bits (if any) remaining to be used for refinement are then determined. Using the combination of both the group coding and refinement, the number of bits coded losslessly is determined.

At the encoder, when all of the above values are computed for all qDepth values, the encoder compares the losslessly coded bits obtained for each of the qDepth values, and the qDepth with the largest amount of losslessly coded bits wins and that qDepth is selected. For the selected qDepth, the following values are coded into the bitstream using fixed length codes: the selected qDepth, the number of groups (at the end of the bitplane number qDepth), the values of the groups (only the most significant qDepth bits for each group), the group number of each pixel (considering only bit planes 1 to qDepth). If there are any remaining bits in the bit budget, refinement bits are sent for the pixels in the block. For a given color component, the same number of refinement bits is sent for the pixels in the block until the bit budget is reached (e.g. refinement bit budget is exhausted) or until the block is coded losslessly, which ever happens first. For example, a refinement bit is sent for all of the pixels or two refinement bits are sent for all of the pixels. In some embodiments, refinement allows different refinement bits to be sent for pixels in a block as long as for each group either all of the pixels in the group get the refinement bits for one bitplane or none of them.

There are several ways for determining the number of groups for each qDepth. In an embodiment, pixel values of the block are first ordered in one row, according to raster scan order. Then, the result is converted into bitplanes. For each pixel, the group number is computed and stored in an element of an array. The encoder scans the bitplanes in a raster scan order. In some embodiments, the bitplanes are configured in a 2D array. The first index of the 2D array is denoted by qDepth and the second index is denoted by "ii." Hence, a general element of the 2D array is able to be specified as array(qDepth, ii). Before starting a scan, the pixels are tagged as members of group 1. When the first bit of the first pixel is scanned (e.g. array(1, 1)), the bit value becomes the value of the group 1 at qDepth = 1. For the remaining elements of the array in the first row, that is, for array(1, ii) with "ii" changing from 1 to 16, if array(1, ii) is equal to array(1,1), then the group number of the pixel "ii" remains 1 as before (no change). However, if array(1, ii) is not equal to array(1,1) which is referred to as a bit mismatch, then the first time this happens, a new group is generated (e.g. group 2) and the group number of pixel "ii" is changed from group 1 to group 2. However, the next time(s) in the first row that a bit mismatch happens, even though the group number for pixel "ii" from group number 1 to group number 2 is changed, group 2 is not generated again. Hence, for group 1, a 1-bit flag is used for indicating whether for previous members of the group with mismatch, a new group has already been generated. In the first row, it is obvious that when a bit match occurs and the flag is set, then the number of the new group is 2. However, in the following bitplanes, the number of the new group is not obvious, and therefore when the new group is generated, the number of the new group is stored. For example, a flag, .hasNext, indicates if a new group has been generated and .next indicates the group number of the newly generated group. For example, in the first row of the array, for group 1, at the first bit mismatch, .hasNext of group 1 is set to 1 and .next of group 1 is set to 2, meaning that from this point on in the current plane, any member of group 1 which will have a mismatch with group 1 in the current bitplane will be tagged as group 2 without the need to generate a new group.

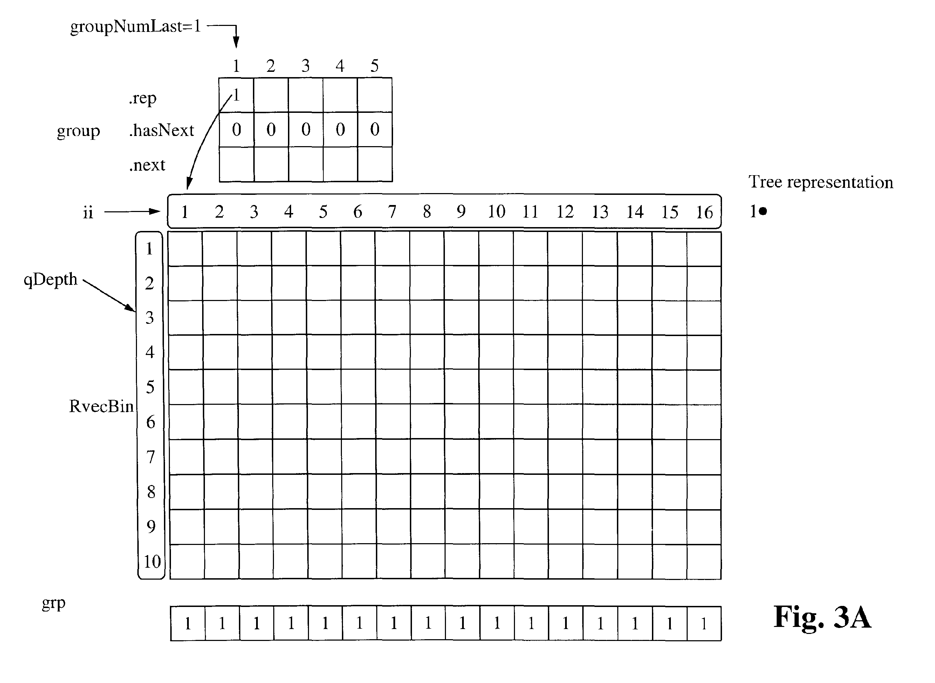

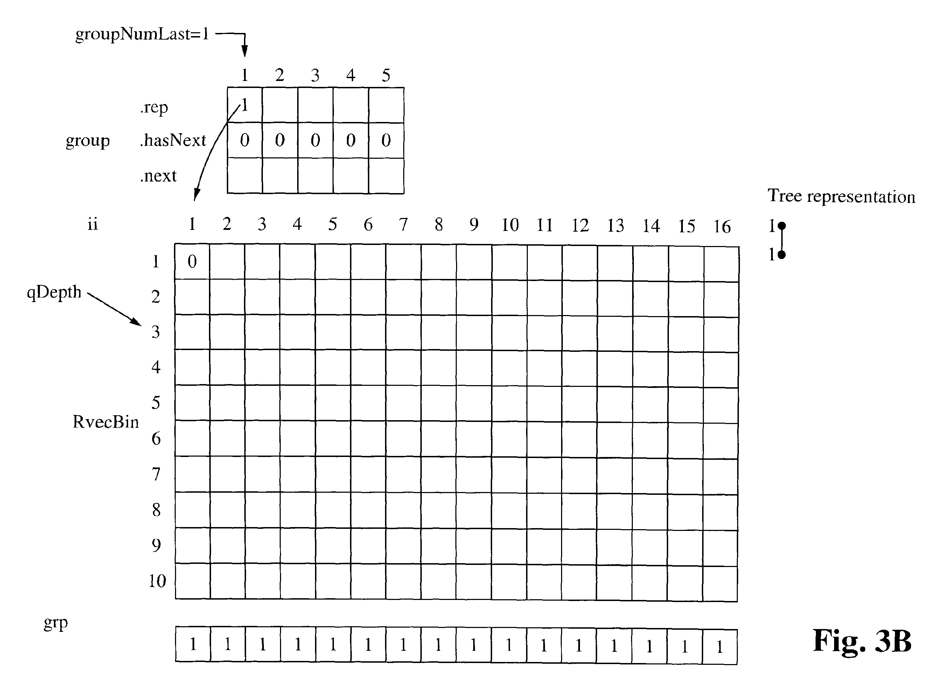

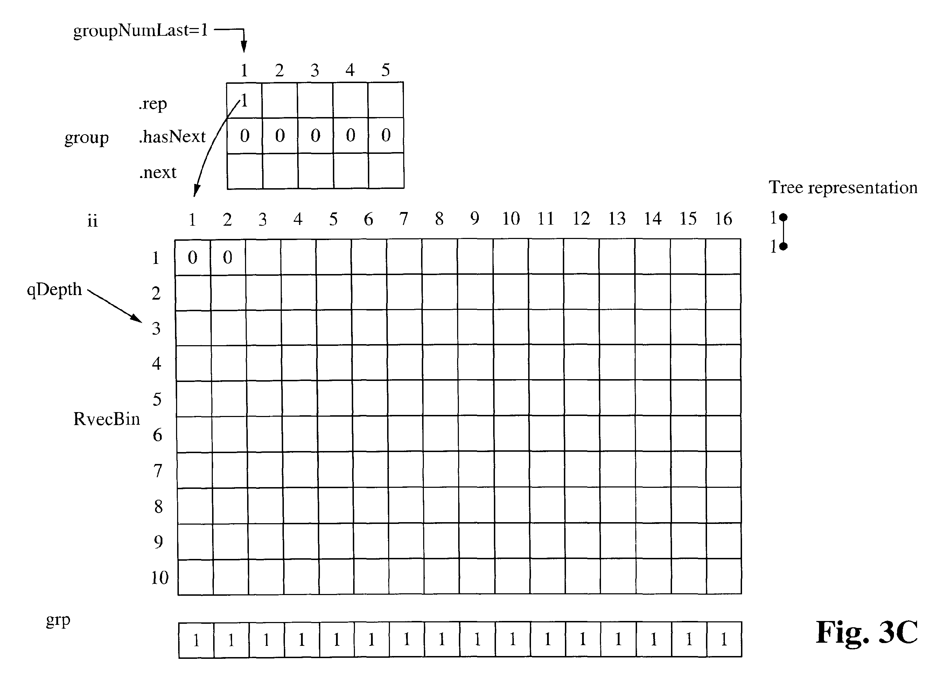

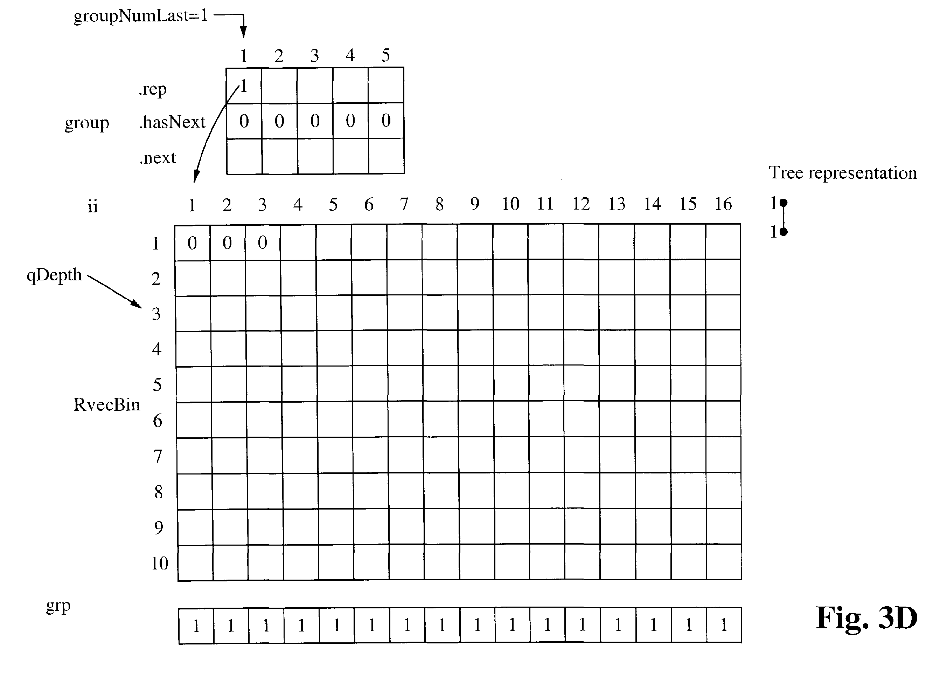

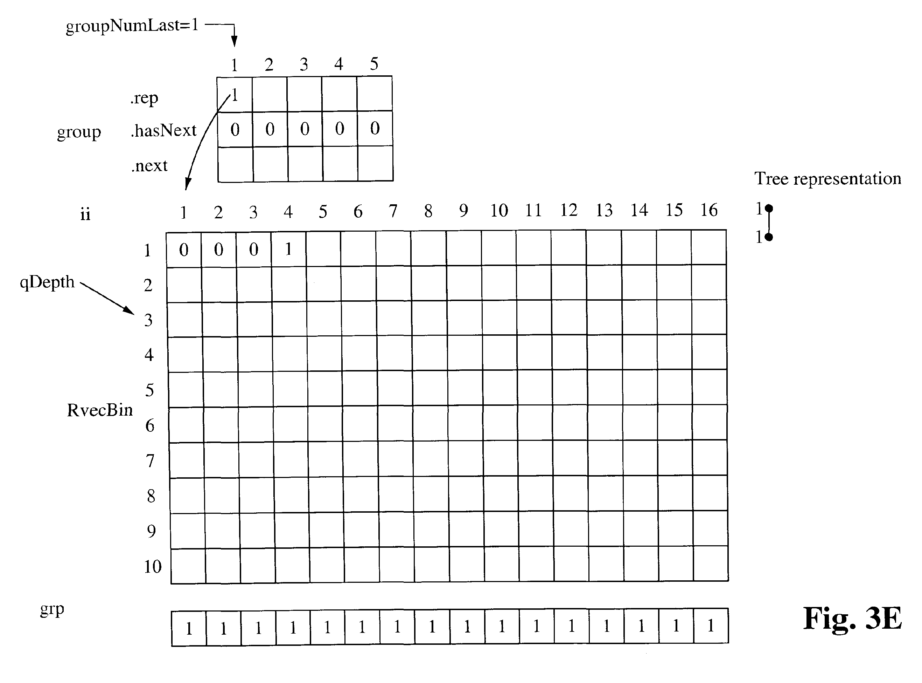

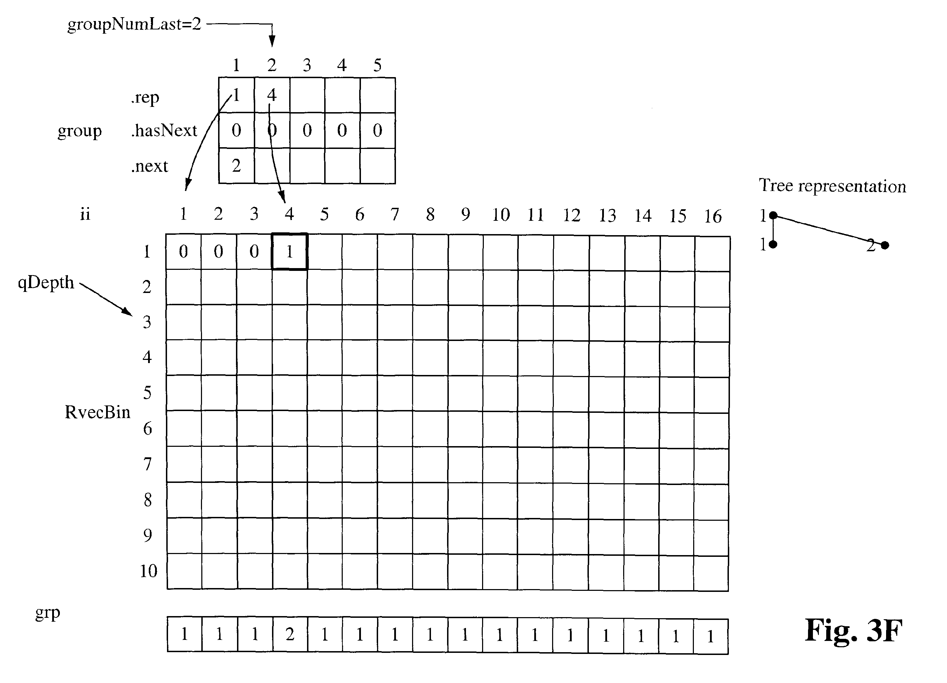

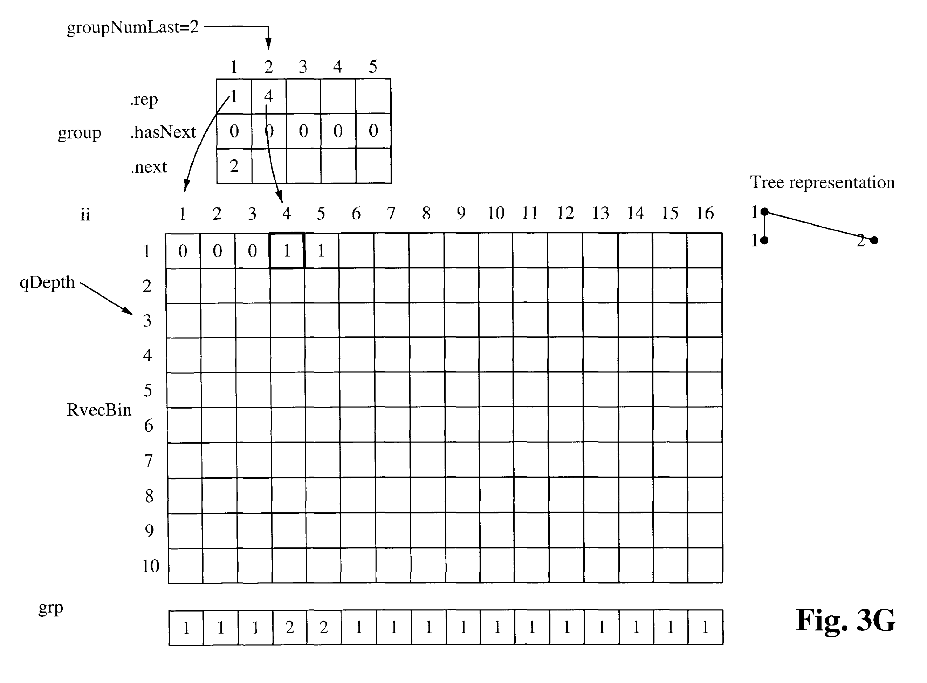

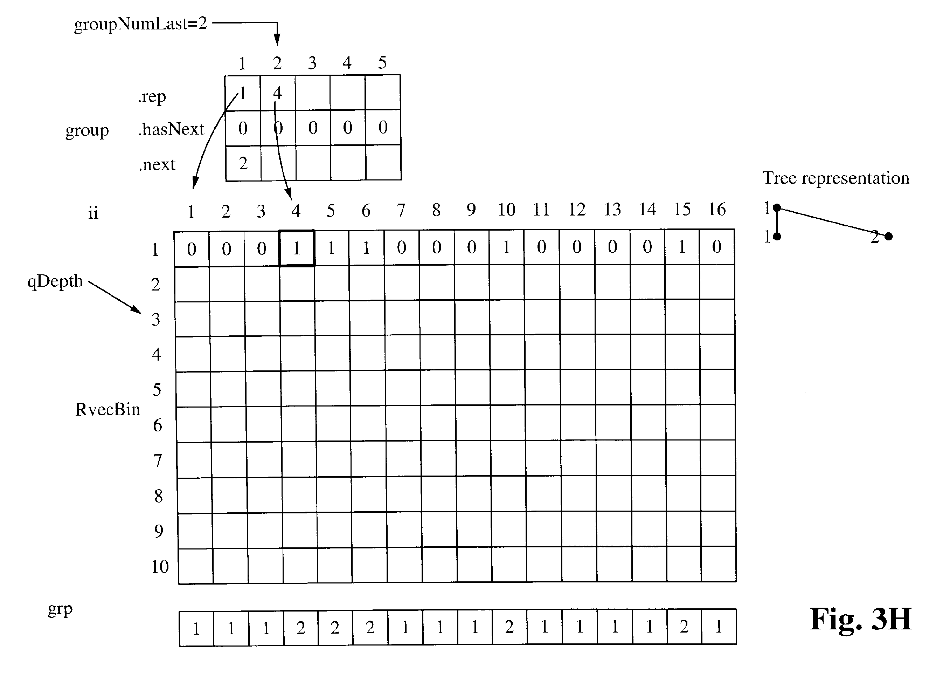

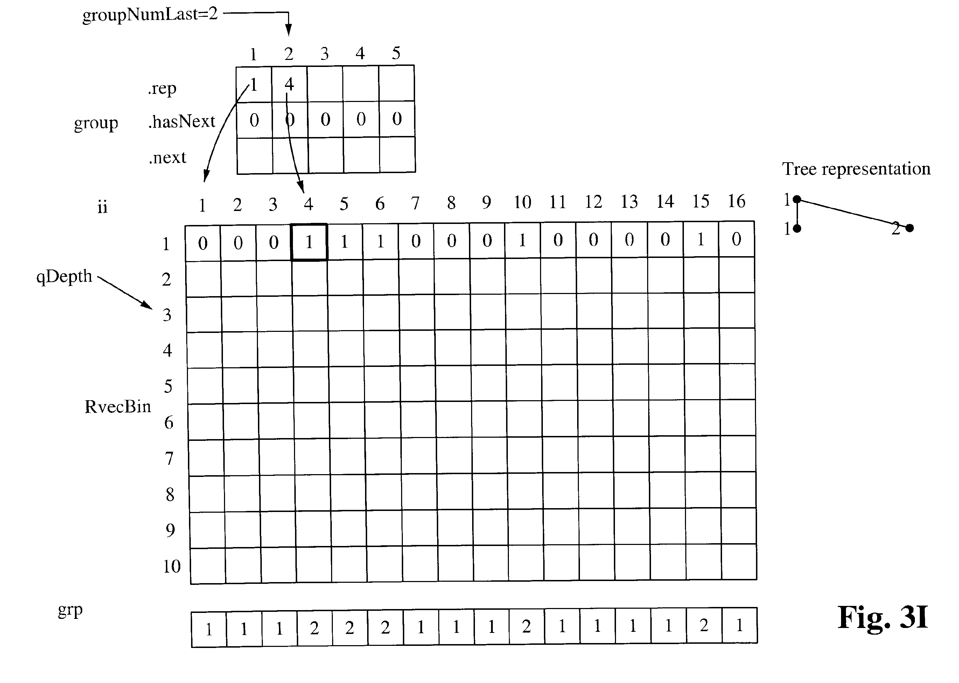

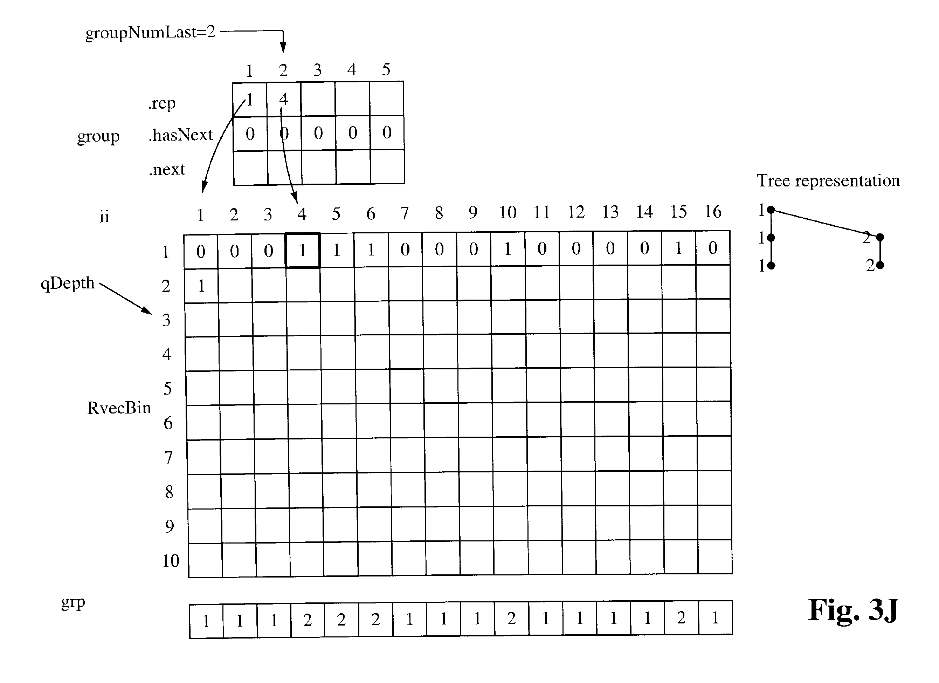

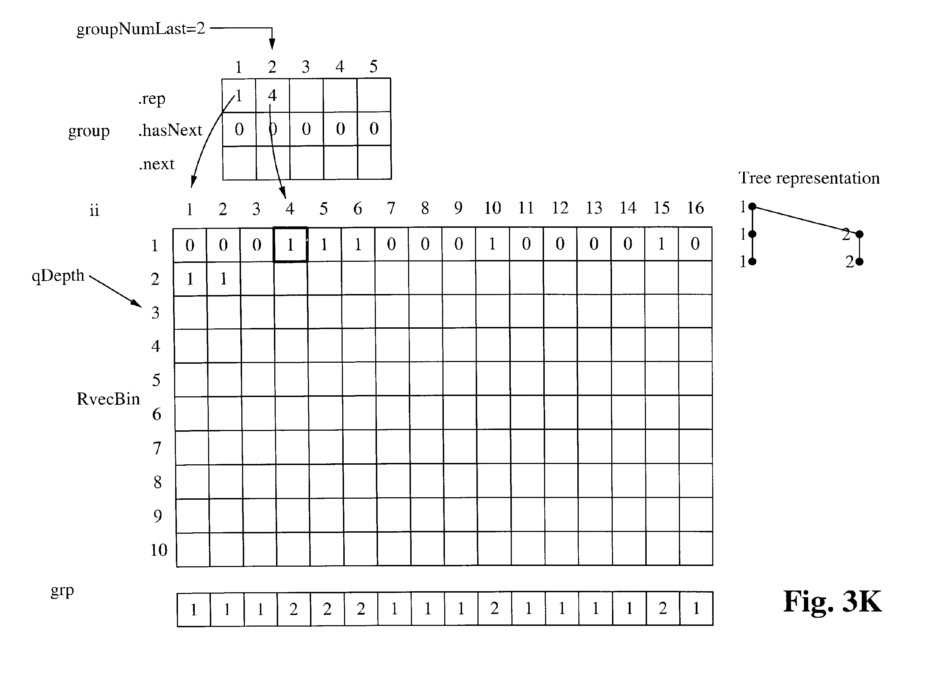

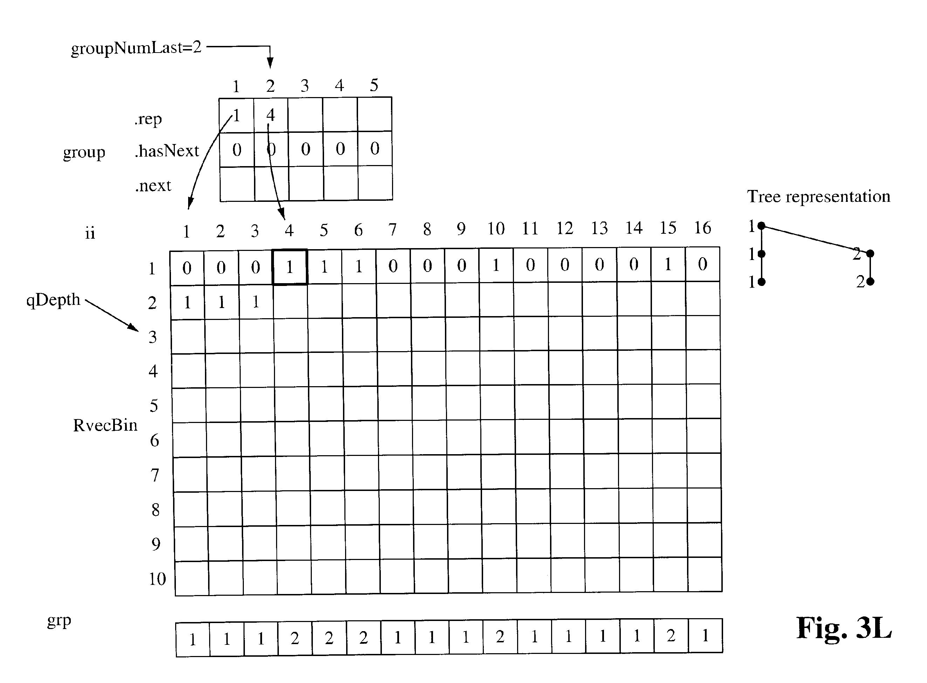

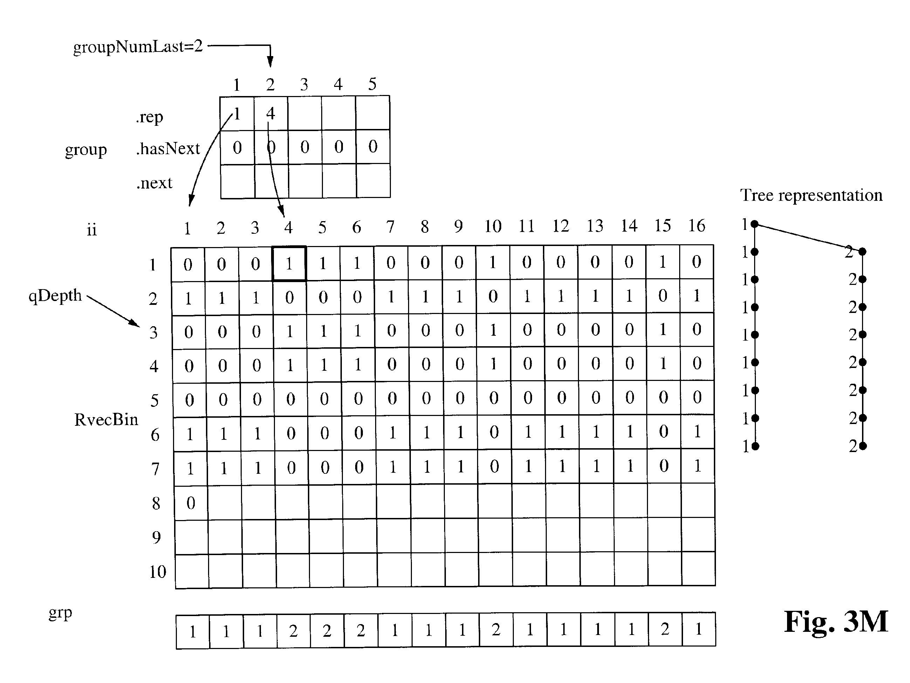

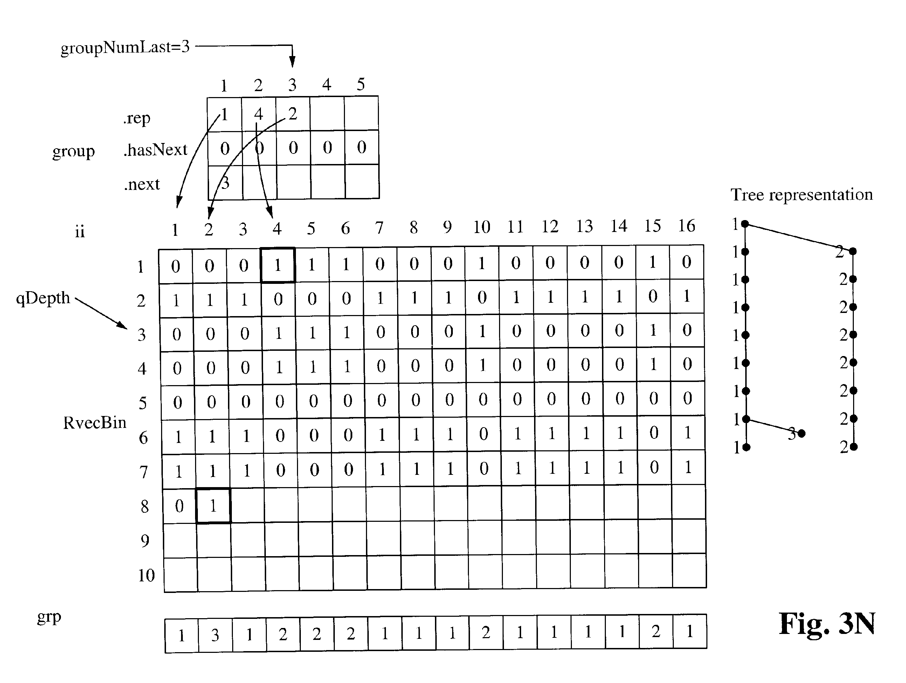

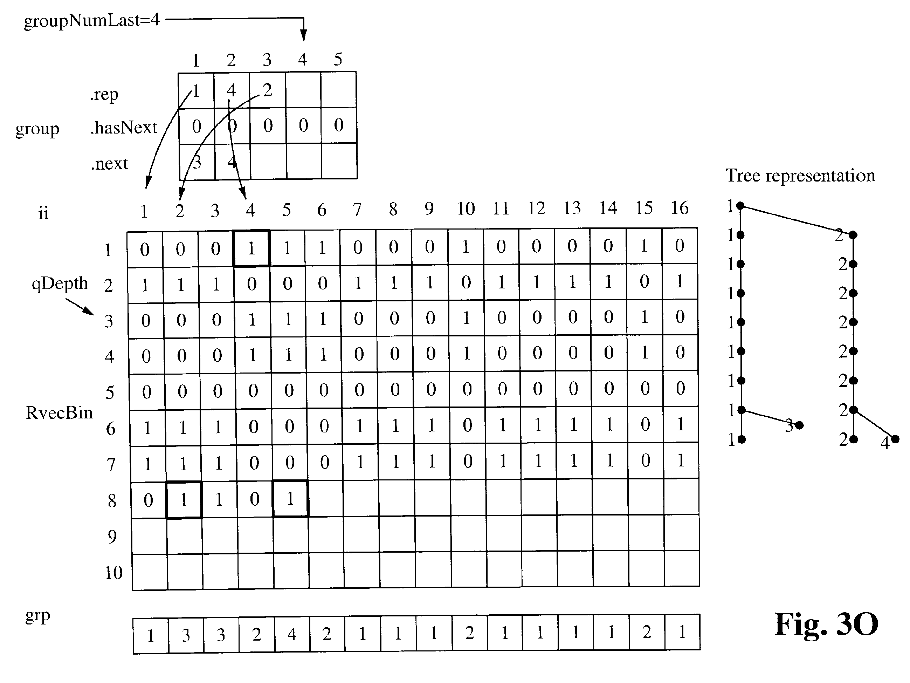

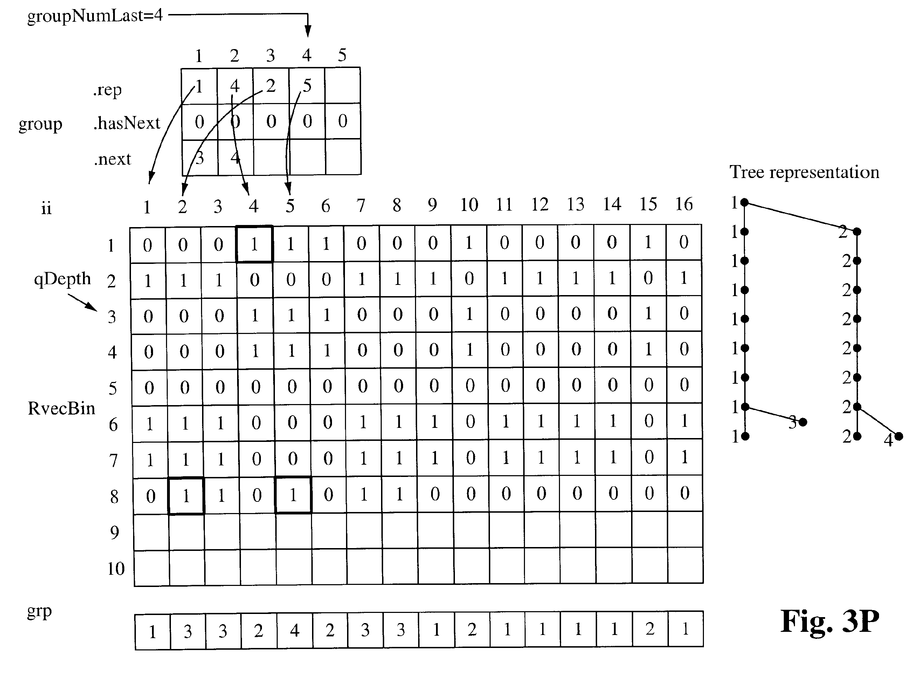

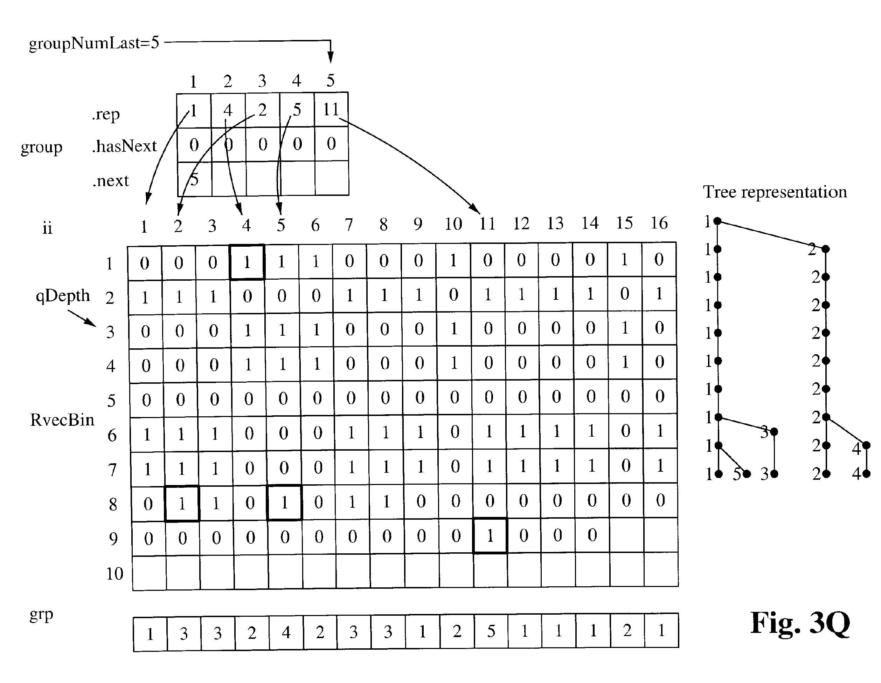

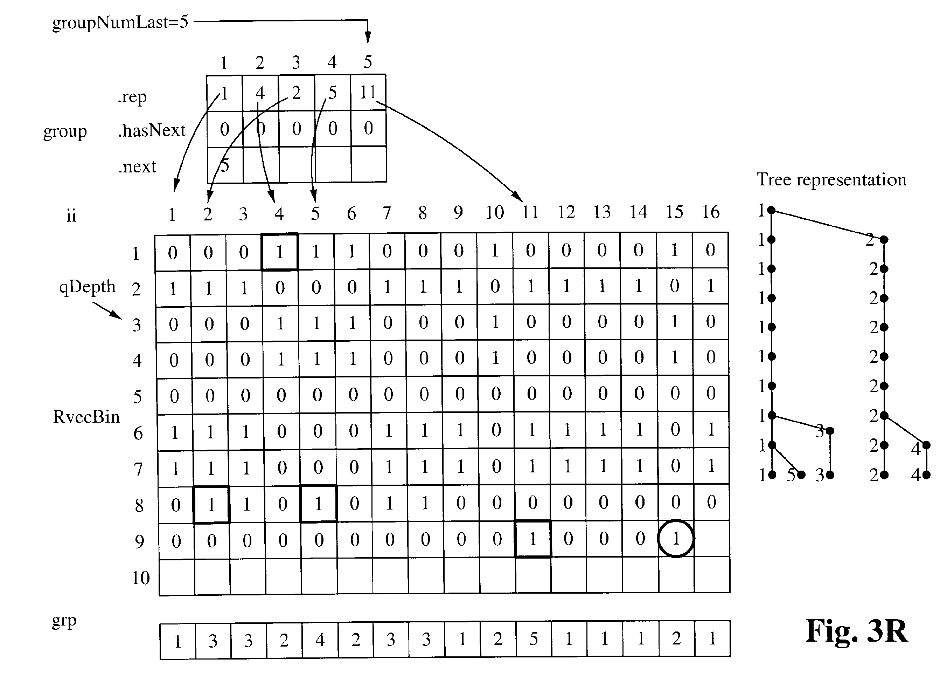

The maximum number of groups is able to be designated. For example, the maximum number of groups is 5, although any maximum number is able to be used. For each individual unique group, a separate data structure referred to as a "group" is able to be generated with fields for the pixel number (.rep in Figure 3), whether the group has been split in the current bitplane (.hasNext in Figure 3), and when .hasNext is 1 what is the group number for the split group in the current bitplane (.next in Figure 3). Additional fields are able to be included as well. The process stops upon reaching the maximum number of groups allowed.

### Bitstream Structure

For each block, the bitstream includes the following sequences of bits: bits indicating the selected qDepth (also referred to as qDepthBest); bits indicating the number of groups for the selected qDepth; for each group, the most significant bits are sent; for each pixel except for the first pixel, the group number of the pixel is sent; if the remaining bits from the bit budget are sufficient, then additional bits are sent for refinement; and the remaining bits up to the bit budget are sent as zeros.

For the bits indicating the selected qDepth, the value is referred to as qDepthBest, which is a fixed length coded into the bitstream. The number of bits used for coding qDepthBest depends on the number of allowed qDepthBest values.

For the bits indicating the number of groups for the selected qDepth, the value is referred to as groupNumBest, which is a fixed length coded into the bitstream. The number of bits used for coding groupNumBest depends on the number of allowed groupNumBest values.

For each pixel except for the first pixel, the group number is a fixed length coded into the bitstream, and the number of bits needed for each pixel depends on the last group number.

### Decoder

The decoder receives the bits indicating the qDepthBest. The decoder also receives the bits indicating groupNumBest. For each group, the most significant qDepthBest bits of their values is received. For each pixel, the bits indicating the group number of the pixel is received, except for the first pixel in the block for which these bits are not sent since the decoder knows that the group number of the first pixel is always 1. For each pixel, the most significant qDepthBest bits of the pixel are filled with the qDepthBest bits of the group value that were received. If the remaining bits from the bit budget are sufficient, then additional bits are received as refinement and the bits fill one or more bitplanes of the pixels after the most significant qDepthBest bitplanes that are filled for each pixel. If qDepthBest plus the refLevelsNum (e.g. the number of refinement bits for the pixel) is less than depth, the bit number qDepthBest+refLevelsNum+1 of the pixels is set to '1,' and the bit number qDepthBest+refLevelsNum+2 to the LSB of the pixels is set to '0.'

When an image or block has more than one color component, there are several options available for coding these color components. Each color component is able to be encoded independently, all of the color components are able to be encoded jointly or some color components are encoded jointly and some are encoded independently.

### Encoding Color Components Jointly

For coding of two or more color components jointly, the process is similar to that described above but with the following changes: the bit budget is shared between components, the group number is not shared between the components and the value of qDepth is shared between the components. Specifically, each color component has its own groups and the groups are not shared between components. For example, the group 1 of the first color component is separate from the group 1 of the second color component. At the beginning of coding, the pixel values in each component belong to the same group in that component. For example, for the RGB case, if R, G and B are coded jointly at the beginning, the red components belong to Group 1 of red, the green components belong to Group 1 of green and the blue components belong to Group 1 of blue. When the encoder sends the qDepth, it represents the qDepth for all of the color components that are coded jointly. The selected qDepth value is shared between the color components. In the bitstream, the encoder sends a separate value of groupNumMax for each of the color components.

### Additional Method for Coding Graphics Image Blocks

Additional methods are able to be used to code graphics image blocks. In the methods, the number of groups used is able to be any power of 2, for example, 2, 4 or 8. The method where there are two groups includes finding an average of all of the pixel values in the block. Then, all of the pixels in the block with a value greater than or equal to the average value are found. The pixel members are tagged as group 1. The remaining pixels are tagged as group 2. The average value of the pixels in group 1 is computed and sent using 10 bits. The average value of the pixels in group 2 is computed and sent using 10 bits. For each pixel, 1 bit is sent to indicate its group number (e.g. 1 or 2). For a block containing 16 pixels, the method yields a total of 10 + 10 + 16 x 1 = 36 bits for each block (2.25 bits per sample).

The method where four groups are used includes a recursive version of the two group method. The pixels in the block are partitioned into two groups using a method similar to that explained in the two group case. Then, for each of the groups obtained in the previous stage, the process is repeated. For a block containing 16 pixels, the method yields a total of 4 x 10 + 16 x 2 = 72 bits for each block (4.5 bits per sample).

The method where eight groups are used includes a recursive version of the two group method. The pixel is partitioned into two groups using a method similar to that explained for the two group case. For each of the groups obtained, the same process is repeated. Then, for each of the groups obtained, the same process is repeated again resulting in eight groups.

### Two-Mode Codecs

In some applications, it is necessary to have a codec that works efficiently for both natural images and synthetic (graphics) images, or a mixture of natural and synthetic. In such applications, a codec that has two parts is able to be used. A first part is a sub-codec that works efficiently for natural images or natural blocks and a second part is a sub-codec that works efficiently for synthetic images or synthetic blocks. The encoder evaluates the quality of the decoded image or block and estimates which of the sub-codecs will result in a higher quality decoded image/block. Then, the encoder specifies the better sub-codec using one or more bits at the beginning of the image/block bitstream to signal to the decoder to use the corresponding decoder.

Therefore, the graphics codecs explained herein are able to be used for the graphics mode. The embedded codec described in US 2010/0310169 A1 (published patent document) is another codec that is able to be used as the graphics mode for such an encoder. For the natural mode, codecs such as US 2010/0310185 A1 and US 2011/0292247 A1 (published patent documents), are able to be used.

Figures 3A-R illustrate graphs of an example of grouping according to some embodiments. Initially, there is only one group, Group 1. Then, scanning occurs in raster scan order. As is shown (Figures 3A-D), the first 3 bits are all part of Group 1, so nothing changes. Then, the fourth bit is read (Figure 3E), which does not match the most recently read bit of its group representative (Group 1). Since Group 1 does not have a successor yet, Group 2 is generated as is shown in Figure 3F. When the fifth bit is read (Figure 3G), the bit does not match the most recently read bit of Group 1, but since Group 2 has already been generated, it is not generated again. The group number of pixel 5 is changed to Group 2. The process continues until the end of the bitplane as shown in Figure 3H. Then, before starting with the next bitplane, the .hasNext field is cleared for the groups generated so far, as shown in Figure 3I. Figure 3J shows the first bit of bitplane two being read which does not cause a change. Similarly, there is no change in Figures 3K and 3L. The process continues in Figure 3M. In Figure 3N, another new group is generated. Similarly, in Figure 3O, a new group is generated. Then, in Figure 3P, the bitplane is finished. In Figure 3Q, a fifth group is generated. Finally, in Figure 3R, the process stops since a sixth group would be generated, but in this example, the maximum number of groups allowed is 5. Figures 3A-R are meant as an example and are not intended to be limiting in any way.

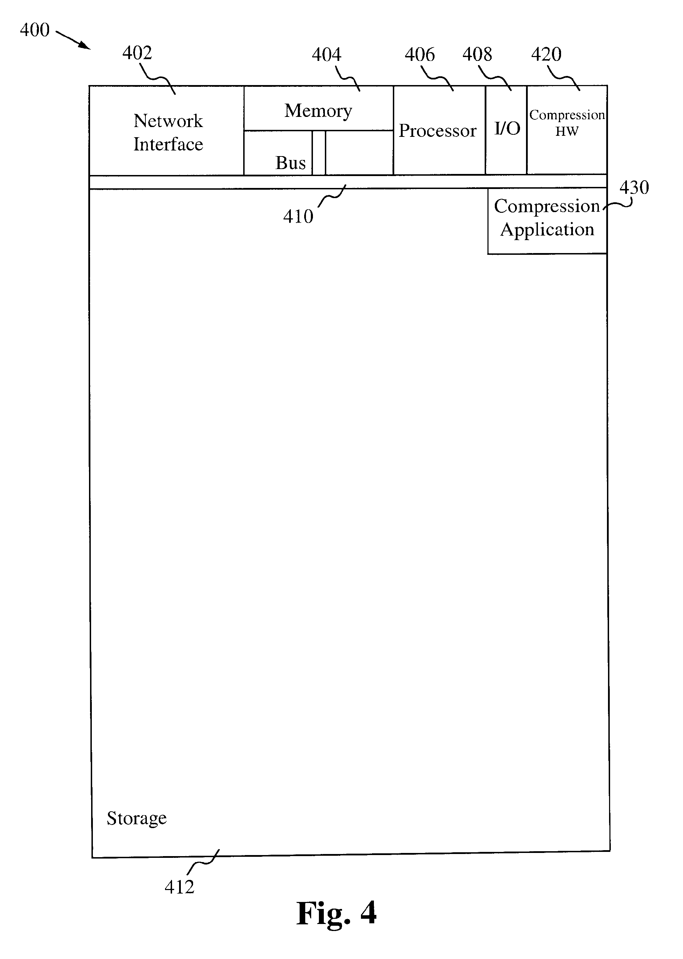

Figure 4 illustrates a block diagram of an exemplary computing device 400 configured to implement the compression method according to some embodiments. The computing device 400 is able to be used to acquire, store, compute, communicate and/or display information such as images and videos. For example, a computing device 400 is able to acquire and store a video. The compression method is able to be used during or after acquiring the video, or when transferring the video from the device 400 to another device. In general, a hardware structure suitable for implementing the computing device 400 includes a network interface 402, a memory 404, a processor 406, I/O device(s) 408, a bus 410 and a storage device 412. The choice of processor is not critical as long as a suitable processor with sufficient speed is chosen. The memory 404 is able to be any conventional computer memory known in the art. The storage device 412 is able to include a hard drive, CDROM, CDRW, DVD, DVDRW, flash memory card or any other storage device. The computing device 400 is able to include one or more network interfaces 402. An example of a network interface includes a network card connected to an Ethernet or other type of LAN. The I/O device(s) 408 are able to include one or more of the following: keyboard, mouse, monitor, display, printer, modem, touchscreen, button interface and other devices. Visual optimization application(s) 430 used to perform the visual optimization method are likely to be stored in the storage device 412 and memory 404 and processed as applications are typically processed. More or less components shown in Figure 4 are able to be included in the computing device 400. In some embodiments, compression hardware 420 is included. Although the computing device 400 in Figure 4 includes applications 430 and hardware 420 for compression, the compression method is able to be implemented on a computing device in hardware, firmware, software or any combination thereof. For example, in some embodiments, the compression applications 430 are programmed in a memory and executed using a processor. In another example, in some embodiments, the compression hardware 420 is programmed hardware logic including gates specifically designed to implement the compression method.

The computing device 400 is able to include an encoder, decoder or both. Depending on the implementation, the computing device 400 includes the components for encoding and/or decoding.

In some embodiments, the compression application(s) 430 include several applications and/or modules. As described herein, modules such as a partitioning module, a bit plane module, an encoding module and a refinement module. In some embodiments, modules include one or more sub-modules as well. In some embodiments, fewer or additional modules are able to be included.

Examples of suitable computing devices include a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPod®/iPhone, a video player, a DVD writer/player, a television, a home entertainment system or any other suitable computing device.

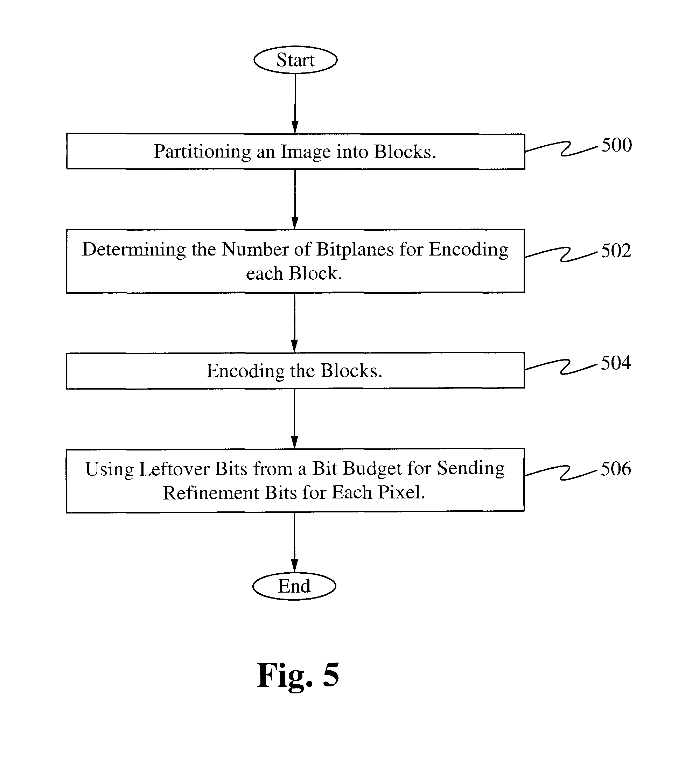

Figure 5 illustrates a flowchart of a method of encoding a video according to some embodiments. In the step 500, an image is partitioned into blocks. In the step 502, the number of bitplanes for encoding each block is determined. In the step 504, the blocks are encoded. Encoding includes grouping pixel values so that within each group the pixel values are the same or similar, sending the number of groups and the pixel value of each group and sending a signal for each pixel to indicate the group for that pixel. In the step 506, leftover bits from a bit budget are used for sending refinement bits for each pixel. In some embodiments, fewer or additional steps are implemented.

To utilize the compression method, a user acquires a video/image such as on a digital camcorder, and while or after the video is acquired, or when sending the video to another device such as a computer, the compression method implements compression tools for each image of the video, so that the video is compressed and transferred appropriately to maintain a high quality video. The compression method occurs automatically without user involvement. Aspects of the compression method are utilized in an encoder embodiment and a decoder embodiment.

In operation, the compression method described herein provides for compression with a low hardware cost (e.g. not many logic gates are needed) in some embodiments, low complexity, low delay, very high visual quality and does not depend on other blocks for encoding. The compression method provides improved compression when transmitting encoded bits. The compression method is able to be used in any implementation including, but not limited to, wireless high definition (Wireless HD).

The compression method described herein is able to be used with videos and/or images.

High definition video is able to be in any format including but not limited to HDCAM, HDCAM-SR, DVCPRO HD, D5 HD, XDCAM HD, HDV and AVCHD.

The present invention has been described in terms of specific embodiments incorporating details to facilitate the understanding of principles of construction and operation of the invention. Such reference herein to specific embodiments and details thereof is not intended to limit the scope of the claims appended hereto. It will be readily apparent to one skilled in the art that other various modifications may be made in the embodiment chosen for illustration without departing from the scope of the invention as defined by the claims.

## Claims

1. A method of image compression, the method being programmed in a controller in a device and comprising:
partitioning (500) an image into blocks of pixel values;
for each block, determining (502) a number of most significant bit planes for which the pixel values can be assigned to one or more groups up to a predetermined maximum allowable number of groups, wherein the maximum number of allowable groups is at least two, and, each group represents those pixel values having identical bits across the determined number of most significant bit planes, wherein the grouping is applied to successively more bit planes until either the least significant bit plane or maximum number of allowable groups is arrived at;
generating an output bit stream including an indication of the number of most significant bit planes used for grouping, an indication of the number of groups, the most significant bits of each group, and for each pixel value of the block other than a first pixel value, a group number of the group assigned to that pixel value.

2. The method of claim 1, there being a bit budget for the output bit stream, the method comprising:
detecting the number of bits required to encode the most significant bit planes of the block according to the assignment to groups; and
using (506) remaining bits from a bit budget to send refinement bits for pixel values in the block, the refinement bits encoding one or more bit planes not included in the number of most significant bit planes used for grouping.

3. The method of claim 1, wherein the controller is selected from the group consisting of a programmed computer readable medium and an application-specific circuit.

4. The method of claim 1, wherein the device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPhone, an iPod®, a video player, a DVD writer/player, a television and a home entertainment system.

5. A system for image compression programmed in a controller in a device, the system comprising:
a partitioning module for partitioning an image into blocks of pixel values;
a determining module operable, for each block, to determine a number of most significant bit planes for which the pixel values can be assigned to one or more groups up to a predetermined maximum allowable number of groups, wherein the maximum number of allowable groups is at least two, and each group represents those pixel values having identical bits across the determined number of most significant bit planes, wherein the grouping is applied to successively more bit planes until either the least significant bit plane or maximum number of allowable groups is arrived at;
an encoding module for generating an output bit stream including an indication of the number of most significant bit planes used for grouping, an indication of the number of groups, the most significant bits of each group, and for each pixel value of the block other than a first pixel value, a group number of the group assigned to that pixel value.

6. The system of claim 5, there being a bit budget for the output bit stream, the system comprising a refinement module for detecting the number of bits required to encode the most significant bit planes of the block according to the assignment to groups, and for using remaining bits from a bit budget to send refinement bits for pixel values in the block, the refinement bits encoding one or more bit planes not included in the number of most significant bit planes used for grouping.

7. The system of claim 5, wherein the controller is selected from the group consisting of a programmed computer readable medium and an application-specific circuit.

8. The system of claim 5, wherein the device is selected from the group consisting of a personal computer, a laptop computer, a computer workstation, a server, a mainframe computer, a handheld computer, a personal digital assistant, a cellular/mobile telephone, a smart appliance, a gaming console, a digital camera, a digital camcorder, a camera phone, an iPhone, an iPod®, a video player, a DVD writer/player, a television and a home entertainment system.

## Patentansprüche

1. Verfahren zur Bildkomprimierung, wobei das Verfahren in einer Steuereinheit in einer Vorrichtung programmiert ist und Folgendes umfasst:
Aufteilen (500) eines Bildes in Blöcke von Pixelwerten;
für jeden Block Bestimmen (502) einer Anzahl von höchstwertigen Bitebenen, für die die Pixelwerte einer oder mehrerer Gruppen bis zu einer vorbestimmten maximal zulässigen Anzahl von Gruppen zugewiesen werden können, wobei die maximale Anzahl zulässiger Gruppen wenigstens zwei ist und jede Gruppe diejenigen Pixelwerte repräsentiert, die über die bestimmte Anzahl höchstwertiger Bitebenen identische Bits aufweisen, wobei die Gruppierung auf zunehmend mehr Bitebenen angewandt wird, bis entweder die niederwertigste Bitebene oder die maximale Anzahl von zulässigen Gruppen erreicht ist;
Erzeugen eines Ausgabebitstroms, der eine Angabe der Anzahl höchstwertiger Bitebenen, die für die Gruppierung verwendet werden, und eine Angabe der Anzahl von Gruppen, der höchstwertigen Bits jeder Gruppe, und für jeden Pixelwert des Blocks, der nicht der erste Pixelwert ist, eine Gruppennummer der Gruppe, die diesem Pixelwert zugewiesen ist, enthält.

2. Verfahren nach Anspruch 1, wobei ein Bit-Budget für den Ausgabebitstrom vorhanden ist und das Verfahren Folgendes umfasst:
Detektieren der Anzahl von Bits, die erforderlich sind, um die höchstwertigen Bitebenen des Blocks gemäß der Zuweisung zu Gruppen zu codieren; und
Verwenden (506) der verbleibenden Bits aus einem Bit-Budget, um Verfeinerungsbits für Pixelwerte in dem Block zu senden, wobei die Verfeinerungsbits eine oder mehrere Bitebenen codieren, die nicht in der Anzahl von höchstwertigen Bitebenen, die für die Gruppierung verwendet werden, enthalten sind.

3. Verfahren nach Anspruch 1, wobei die Steuereinheit aus der Gruppe ausgewählt ist, die aus einem programmierten computerlesbaren Medium und einer anwendungsspezifischen Schaltung besteht.

4. Verfahren nach Anspruch 1, wobei die Vorrichtung ausgewählt ist aus einer Gruppe, die aus einem Personalcomputer, einem Laptop-Computer, einer Computer-Workstation, einem Server, einem Mainframe-Computer, einem tragbaren Computer, einem persönlichen digitalen Assistenten, einem Mobiltelefon, einem intelligenten Haushaltsgerät, einer Spielkonsole, einer Digitalkamera, einem digitalen Camcorder, einem Kameratelefon, einem iPhone, einem iPod®, einem Videoabspielgerät, einer DVD-Schreib/Lesegerät, einem Fernsehgerät und einem Heimunterhaltungssystem besteht.

5. System zur Bildkomprimierung, das in einer Steuereinheit in einer Vorrichtung programmiert ist, wobei das System Folgendes umfasst:
ein Aufteilungsmodul zum Aufteilen eines Bilds in Blöcke von Pixelwerten;
ein Bestimmungsmodul, das arbeitet, für jeden Block eine Anzahl von höchstwertigen Bitebenen, für die die Pixelwerte einer oder mehrerer Gruppen zugewiesen werden können, bis zu einer vorbestimmten maximal zulässigen Anzahl von Gruppen zu bestimmen, wobei die maximale Anzahl zulässiger Gruppen wenigstens zwei ist und jede Gruppe diejenigen Pixelwerte repräsentiert, die über die bestimmte Anzahl höchstwertiger Bitebenen identische Bits aufweisen, wobei die Gruppierung auf zunehmend mehr Bitebenen angewandt wird, bis entweder die niederwertigste Bitebene oder die maximale Anzahl von zulässigen Gruppen erreicht ist;
ein Codierungsmodul zum Erzeugen eines Ausgabebitstroms, der eine Angabe der Anzahl höchstwertiger Bitebenen, die für die Gruppierung verwendet werden, und eine Angabe der Anzahl von Gruppen, der höchstwertigen Bits jeder Gruppe, und für jeden Pixelwert des Blocks, der nicht der erste Pixelwert ist, eine Gruppennummer der Gruppe, die diesem Pixelwert zugewiesen ist, enthält.

6. System nach Anspruch 5, wobei ein Bit-Budget für den Ausgabebitstrom vorhanden ist und das System ein Verfeinerungsmodul zum Detektieren der Anzahl von Bits, die erforderlich sind, um die höchstwertiger Bitebenen des Blocks gemäß der Zuweisung zu Gruppen zu codieren, und zum Verwenden verbleibender Bits aus einem Bit-Budget, um Verfeinerungsbits für Pixelwerte in dem Block zu senden, umfasst, wobei die Verfeinerungsbits eine oder mehrere Bitebenen codieren, die nicht in der Anzahl höchstwertiger Bitebenen, die zum Gruppieren verwendet werden, enthalten sind.

7. System nach Anspruch 5, wobei die Steuereinheit aus der Gruppe ausgewählt ist, die aus einem programmierten computerlesbaren Medium und einer anwendungsspezifischen Schaltung besteht.

8. System nach Anspruch 5, wobei die Vorrichtung ausgewählt ist aus einer Gruppe, die aus einem Personalcomputer, einem Laptop-Computer, einer Computer-Workstation, einem Server, einem Mainframe-Computer, einem tragbaren Computer, einem persönlichen digitalen Assistenten, einem Mobiltelefon, einem intelligenten Haushaltsgerät, einer Spielkonsole, einer Digitalkamera, einem digitalen Camcorder, einem Kameratelefon, einem iPhone, einem iPod®, einem Videoabspielgerät, einer DVD-Schreib/Lesegerät, einem Fernsehgerät und einem Heimunterhaltungssystem besteht.

## Revendications

1. Procédé de compression d'images, le procédé étant programmé dans un contrôleur dans un dispositif et comprenant les étapes consistant à :
partitionner (500) une image en blocs de valeurs de pixel ;
pour chaque bloc, déterminer (502) un nombre de plans de bits de poids fort pour lesquels il est possible d'assigner les valeurs de pixel à un ou plusieurs groupes à hauteur d'un nombre maximal admissible prédéterminé de groupes, le nombre maximal admissible de groupes étant supérieur ou égal à deux et chaque groupe représentant les valeurs de pixel ayant des bits identiques sur le nombre déterminé de plans de bits de poids fort, le regroupement étant appliqué à des plans de bits de plus en plus nombreux jusqu'à atteindre le plan de bits de poids faible ou bien le nombre maximal admissible de groupes ;
générer un flux de bits de sortie contenant une indication du nombre de plans de bits de poids fort utilisés pour le regroupement, une indication du nombre de groupes, les bits de poids fort de chaque groupe et, pour chaque valeur de pixel du bloc autre qu'une première valeur de pixel, un numéro de groupe du groupe assigné à cette valeur de pixel.

2. Procédé selon la revendication 1, un budget en bits étant défini pour le flux de bits de sortie, le procédé comprenant les étapes consistant à :
détecter le nombre de bits nécessaire au codage des plans de bits de poids fort du bloc conformément à l'assignation à des groupes ; et
utiliser (506) des bits restants d'un budget en bits pour envoyer des bits d'affinage pour des valeurs de pixel dans le bloc, les bits d'affinage codant un ou plusieurs plans de bits qui ne font pas partie du nombre de plans de bits de poids fort utilisés pour le regroupement.

3. Procédé selon la revendication 1, dans lequel le contrôleur est choisi parmi le groupe constitué par un support programmé lisible par ordinateur et un circuit propre à une application.

4. Procédé selon la revendication 1, dans lequel le dispositif est choisi parmi le groupe constitué par un ordinateur personnel, un ordinateur portable, un poste de travail informatique, un serveur, un ordinateur central, un ordinateur de poche, un assistant numérique personnel, un téléphone cellulaire/mobile, un appareil intelligent, une console de jeu, un appareil photo numérique, un caméscope numérique, un téléphone-appareil photo, un iPhone, un iPod®, un lecteur vidéo, un graveur/lecteur de DVD, un téléviseur et un système de divertissement domestique.

5. Système de compression d'images programmée dans un contrôleur dans un dispositif, le système comprenant :
un module de partitionnement servant à partitionner une image en blocs de valeurs de pixel ;
un module de détermination apte, pour chaque bloc, à déterminer un nombre de plans de bits de poids fort pour lesquels il est possible d'assigner les valeurs de pixel à un ou plusieurs groupes à hauteur d'un nombre maximal admissible prédéterminé de groupes, le nombre maximal admissible de groupes étant supérieur ou égal à deux et chaque groupe représentant les valeurs de pixel ayant des bits identiques sur le nombre déterminé de plans de bits de poids fort, le regroupement étant appliqué à des plans de bits de plus en plus nombreux jusqu'à atteindre le plan de bits de poids faible ou bien le nombre maximal admissible de groupes ;
un module de codage servant à générer un flux de bits de sortie contenant une indication du nombre de plans de bits de poids fort utilisés pour le regroupement, une indication du nombre de groupes, les bits de poids fort de chaque groupe et, pour chaque valeur de pixel du bloc autre qu'une première valeur de pixel, un numéro de groupe du groupe assigné à cette valeur de pixel.

6. Système selon la revendication 5, un budget en bits étant défini pour le flux de bits de sortie, le système comprenant un module d'affinage servant à détecter le nombre de bits nécessaire au codage des plans de bits de poids fort du bloc conformément à l'assignation à des groupes, et à utiliser des bits restants d'un budget en bits pour envoyer des bits d'affinage pour des valeurs de pixel dans le bloc, les bits d'affinage codant un ou plusieurs plans de bits qui ne font pas partie du nombre de plans de bits de poids fort utilisés pour le regroupement.

7. Système selon la revendication 5, dans lequel le contrôleur est choisi parmi le groupe constitué par un support programmé lisible par ordinateur et un circuit propre à une application.

8. Système selon la revendication 5, dans lequel le dispositif est choisi parmi le groupe constitué par un ordinateur personnel, un ordinateur portable, un poste de travail informatique, un serveur, un ordinateur central, un ordinateur de poche, un assistant numérique personnel, un téléphone cellulaire/mobile, un appareil intelligent, une console de jeu, un appareil photo numérique, un caméscope numérique, un téléphone-appareil photo, un iPhone, un iPod®, un lecteur vidéo, un graveur/lecteur de DVD, un téléviseur et un système de divertissement domestique.
